(19) Europäisches Patentamt / European Patent Office / Office européen des brevets

(11) **EP 3 893 020 B1**

(12) **EUROPEAN PATENT SPECIFICATION**

(45) Date of publication and mention
of the grant of the patent:
**23.04.2025 Bulletin 2025/17**

(21) Application number: **21164180.8**

(22) Date of filing: **23.03.2021**

(51) International Patent Classification (IPC):
*G01S 7/41* (2006.01)     *G01S 7/292* (2006.01)
*G01S 7/35* (2006.01)     *G01S 13/18* (2006.01)
*G01S 13/42* (2006.01)     *G01S 13/66* (2006.01)

(52) Cooperative Patent Classification (CPC):
**G01S 7/414; G01S 7/2923; G01S 7/354;
G01S 7/417; G01S 13/18; G01S 13/426;
G01S 13/66**

(54) **SYSTEM FOR PROCESSING RADAR DATA REPRESENTING INTENSITY VALUES OF RECEIVED POWER OF REFLECTED RADAR WAVE SIGNALS**

SYSTEM ZUR VERARBEITUNG VON RADARDATEN MIT INTENSITÄTSWERTEN DER EMPFANGENEN LEISTUNG VON REFLEKTIERTEN RADARWELLENSIGNALEN

SYSTÈME DE TRAITEMENT DE DONNÉES RADAR REPRÉSENTANT DES VALEURS D'INTENSITÉ DE PUISSANCE REÇUE DE SIGNAUX D'ONDES RADAR RÉFLÉCHIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2020 DK PA202070213**

(43) Date of publication of application:
**13.10.2021 Bulletin 2021/41**

(73) Proprietor: **Robin Radar Facilities BV
2497 GM The Hague (NL)**

(72) Inventors:
• **Westra, Hylke Jurjen Lijsbert
2312 AN Leiden (NL)**
• **Hamminga, Siete
2101 ZL Heemstede (NL)**

(74) Representative: **Nordic Patent Service A/S
Bredgade 30
1260 Copenhagen K (DK)**

(56) References cited:
EP-A1- 3 505 951          DK-A1- 201 770 854
US-A1- 2010 073 218

**Description**

<u>TECHNICAL FIELD</u>

The disclosure relates generally to a system for processing radar data, which system holds pre-processing circuitry configured to reduce the effect of clutter in received radar image data.

<u>BACKGROUND</u>

Raw radar images can be divided into range cells, which hold intensity value data for received power of reflected radar wave signals, which reflected radar wave signals may arise not only from targets or objects to be tracked but also from clutter, such as static clutter, and semi-dynamic and dynamic fluctuating clutter. Static clutter may represent grounds, buildings, parked cars and tree trunks, while semi-dynamic clutter may represent waving grass, wheat, flags and leaves, and dynamic clutter may represent rain and sea clutter. In order to select radar image range cells holding data representing objects to be tracked, there is a need to be able to remove or distinguish range cells holding reflected radar wave data, which is dominated by clutter.

Traditionally, raw radar image data is going through a clutter filtering process, which may comprise a static clutter filtering. For static clutter filtering the radar system should be run a while before normal operation in order to build up an average on intensity values for range cells of successive radar images. When into normal operation, range cells with intensity values higher than the corresponding average may be considered as representing an object to be tracked, and such neighboring range cells within the same radar image may be grouped into plots. A margin may be given to the determined average intensity values in order to take into account some fluctuating clutter, such as semi-dynamic clutter. US 2010/073218 A1 describes a radar system that detects relatively fast moving targets using a radar clutter map and constant false alarm rate processing.

Modern computer technology allows the use of artificial intelligence, such as convolutional neural networks, which may be trained with a large number of known radar images in order to process data of new incoming radar images to help in selecting radar image range cells holding data representing objects to be tracked. Such trained neural networks may be trained not only to find neighboring range cells holding matching data for objects to be tracked but may also be trained to recognize range cells holding reflected radar wave data being dominated by different kinds of clutter.

Thus, in order to make an effective use of a trained artificial intelligence system, a new type of pre-processing of radar image data is needed before entering these data to a trained artificial intelligence system, which pre-processing may support a following clutter filtering process.

<u>SUMMARY</u>

It is an object of the present disclosure to provide a system for processing radar data, which system holds pre-processing circuitry configured to perform a pre-process of received radar image data, to thereby deliver an optimized input of processed radar data for further processing. This further processing may include a labelling or linking of radar image range cells into radar plots representing objects to be tracked.

This object is achieved by the system according to the invention defined in claim 1.

According to the invention, the first deviation process for each range cell having a location within the first radar image comprises a determination of a first intensity value based at least partly on the intensity value of the range cell.

According to the invention, for the first deviation process the determination of the first deviation value of the intensity value of a range cell having a location within the first radar image is based at least partly on the obtained first intensity value and the obtained initial value for the moving average of the intensity value of the range cell.

According to the invention, for the first deviation process the determination of the first value for the moving average of the intensity value is based at least partly on the obtained initial value for the moving average and the obtained first intensity value.

In a possible implementation form, the determination of the first deviation value for a range cell at a location within the first radar image includes a subtraction of said obtained initial value for the moving average of the intensity value from the obtained first intensity value for the range cell having said location within said first radar image.

In a possible implementation form, the determination of the next deviation value for a range cell at a location within a next radar image includes a subtraction of said previously obtained value for the moving average of the intensity value from the obtained next intensity value for the range cell having said location within said next radar image.

In a possible implementation form, the next value for the moving average of the intensity value for a range cell is determined as an exponential moving average value.

An exponential moving average function may have a weighting or scaling factor, and by using an exponential moving average function for calculating the next value for the moving average of the intensity value for a range cell, it is possible to choose a weighting or scaling factor having a relatively small value, whereby received power from short-time scale phenomenon such as fluctuating clutter will be reduced.

The intensity value of received power, X, for a range cells of a radar image represents received power of reflected radar wave signals, which reflected radar wave signals may arise from targets or objects to be tracked, given a power T, and from clutter, such as static clutter, given a power S, and semi-dynamic and dynamic fluctuating clutter, giving a power F. Thus, the total received power X may be set equal to S + F + T.

When using a moving average of the intensity values, the moving average may be taken over a period with a high number of incoming scanned radar images. Whatever is done for the initial value of the moving average it assumes something about values prior to the available data and is necessarily in error. In view of this, the early results should be regarded as unreliable until the iterations have had time to converge.

The resulting averaged intensity value, Xavg, for a range cell within a radar image may hold an average value for the received power of static clutter, Savg being substantially constant and therefore equal to S, and a mean average of the power from fluctuating clutter, Fmean, while the averaged power intensity for a detected target or object disappears, since the average is taken over a relatively long time period. Thus, the averaged received power Xavg may be set substantially equal to S + Fmean.

For a range cell of a new radar image, i, the intensity value of received power, Xi, may be set equal to the sum of the power from static clutter, Si which is substantially equal to S, plus the power from the fluctuating clutter, Fi, and the power from a detected target or object Ti. Thus, Xi may be set equal to S + Fi + Ti.

The deviation in the intensity value of received power for the range cell of image i may then be determined as the deviation from the averaged of the received power for this range cell, thus the deviation in the intensity value of received power, Xdev, for the range cell may be set equal to Xi minus Xavg. Thus, Xdev may be set equal to Ri - Rdev, which is substantially equal to (S + Fi +Ti) - (S + Fmean) being equal to (Fi - Fmean) + Ti.

By determining a deviation value for the intensity value of received power for a range cell having a location within a radar image, for which the deviation value is determined based on a previously determined value for a moving average of the intensity value of received power for the range cell at this location, and based on the actually obtained intensity value of received power for the range cell having this location, the resulting deviation value represents an intensity value, for which the static clutter power, S, is substantially filtered out, the peak value of the fluctuating clutter power, Fi, has been severely reduced, while the power from a detected object, Ti, is maintained.

It is noted that while the peak intensity values representing fluctuation clutter has been reduced, the spatial structure within a radar image of range cells holding intensity values including fluctuating clutter power is maintained. Thus, the true target or object power part of the intensity value of a range cell gets a preferential treatment compared to the power part from fluctuating clutter. The fact that the spatial structure is retained within the obtained deviation values makes the obtained results suitable for further processing. Such further processing may be performed by processing circuitry configured to recognize range cell patterns that are associated with fluctuating clutter and to distinguish such patterns from range cell patters representing true objects to be tracked.

In a possible implementation form, the first intensity value for each of the range cells within the first radar image is determined as a first normalized intensity value based at least partly on the intensity value of said range cell and a determined maximum intensity value for all the range cells of the first radar image.

In a possible implementation form, the next intensity value for each of the range cells having a location within a following next obtained radar image is determined as a next normalized intensity value based at least partly on the intensity value of the range cell having said location within said next radar image and a determined maximum intensity value for all the range cells of said next radar image.

In a possible implementation form, the first intensity value for each of the range cells within the first radar image is determined as a first normalized intensity value based at least partly on the intensity value of said range cell and determined maximum and minimum intensity values for all the range cells of the first radar image.

In a possible implementation form, next intensity value for each of the range cells having a location within a following next obtained radar image is determined as a next normalized intensity value based at least partly on the intensity value of the range cell having said location within said next radar image and determined maximum and minimum intensity values for all the range cells of said next radar image.

By normalizing the intensity values, the resulting value may be brought into a range suitable for neural network processing.

In a possible implementation form form, the first deviation value for each of the range cells within the first radar image is determined as a first scaled deviation value.

In a possible implementation form, the next deviation value for each of the range cells having a location within a following next obtained radar image is determined as a next scaled deviation value.

In a possible implementation form, an initialization process comprises:

determining the initial value for the moving average of the intensity value for each range cell within the first radar image based on the obtained first intensity value of the range cell.

In a possible implementation form, the initial value for the moving average of the intensity value for each range cell within the first radar image is equal to the obtained first intensity value of the range cell.

In a possible implementation form form, the first value for the moving average of the intensity value for each range cell within the first radar image is equal to the obtained first intensity value of the range cell.

In a possible implementation form, the first or next normalized intensity value for a range cell is determined as a normalized intensity value, Xnorm, being determined by use of the equation

$$Xnorm = (X-Xmin)/(Xmax-Xmin), \qquad (1)$$

wherein X is the intensity value for the range cell, and Xmin and Xmax are the minimum and maximum intensity values, respectively, for the all range cells of the radar image holding the range cell.

By use of equation (1), the first normalized intensity value for a range cell within the first radar image may be determined as a normalized intensity value, Xnorm, being determined by use of the equation

$$Xnorm\text{-}first = (X-Xmin)/(Xmax-Xmin), \qquad (1a)$$

wherein X is the intensity value for the range cell, and Xmin and Xmax are the minimum and maximum intensity values, respectively, for the all range cells of the first radar image.

By use of equation (1), the next normalized intensity value for a range cell within a next radar image may be determined as a normalized intensity value, Xnorm, being determined by use of the equation

$$Xnorm\text{ -}next = (X-Xmin)/(Xmax-Xmin), \qquad (1b)$$

wherein X is the intensity value for the range cell, and Xmin and Xmax are the minimum and maximum intensity values, respectively, for the all range cells of the next radar image.

By normalizing the intensity values with Xmax and Xmin, the resulting value of Xnorm in in the range of 0 to 1.

In a possible implementation form, then for any selected range cell within the first obtained radar image, the first value for the moving average of the intensity value, Xavg-first is determined by use of the equation

$$Xavg\text{-}first = (1\text{-}f)\ Xavg\text{-}initial + f\ Xnorm\text{-}first, \qquad (2)$$

wherein Xnorm-first is the normalized intensity value for the selected range cell within the first obtained radar image, and Xavg-inital is the initial determined moving average of the intensity value for the same selected range cell within the first radar image, and f is a scaling factor.

As mentioned above, in a possible implementation form, the initial value for the moving average of the intensity value for each range cell within the first radar image is equal to the obtained first intensity value of the range cell. Thus, when the obtained first intensity value of a range cell within the first radar image is equal to the normalized intensity value Xnorm-first, then by use of equation (2), the first value for the moving average of the intensity value, Xavg-first, for any selected range cell within the first obtained radar image is equal to Xnorm-first.

In a possible implementation form, the scaling factor f is in the range of 1/300 to 1/50, such as 1/250 to 1/100, such as 1/200.

In a possible implementation form, then for any selected range cell within a next obtained radar image, the next value for the moving average of the intensity value, Xavg-new is determined by use of the equation

$$Xavg\text{-}new = (1\text{-}f)\ Xavg\text{-}pre + f\ Xnorm\text{-}next, \qquad (3)$$

wherein Xnorm-next is the normalized intensity value for the selected range cell within said next obtained radar image, and Xavg-pre is the moving average of the intensity value for the same selected range cell within the previous radar image, and f is a scaling factor.

In a possible implementation form, the scaling factor f is in the range of 1/300 to 1/50, such as 1/250 to 1/100, such as 1/200.

The moving average is updated to account for changes in the steady state. The scaling or smoothing factor f represents the tradeoff by how quickly a response to changes can be obtained, such as a change in weather, and to accuracy of the estimates. If a large value is used for f, newer images carry a larger weight, meaning that changes in the steady state is observed faster, whereby received power from fluctuating clutter will be more visible into the moving average. By choosing a relatively small value for f, such as 1/200, received power from short-time scale phenomenon such as fluctuating clutter will be reduced.

In a possible implementation form, then for any selected range cell within the first obtained radar image, the first deviation value is determined as a first scaled deviation value, Xdev-first, determined by use of the equation

$$\text{Xdev-first} = \min(\max[(\text{Xnorm-first} - \text{Xavg-initial} + 0,5), 0], 1) \tag{4}$$

wherein Xnorm-first is the normalized intensity value for the selected range cell within said first obtained radar image, and Xavg-initial is the initial determined moving average of the intensity value for the same selected range cell within the first radar image.

As mentioned above, in a possible implementation form, the initial value for the moving average of the intensity value for each range cell within the first radar image is equal to the obtained first intensity value of the range cell, and when the obtained first intensity value of a range cell within the first radar image is equal to the normalized intensity value Xnorm-first, then by use of equation (2), the first value for the moving average of the intensity value, Xavg-first, for any selected range cell within the first obtained radar image is equal to Xnorm-first. Thus, by inserting Xavg-first = Xnorm-first into equation (4), the first deviation value for any selected range cell within the first obtained radar image Xdev-first is equal to 0,5.

In a possible implementation form, then for any selected range cell within a next obtained radar image, the value of the next deviation value is determined as a next scaled deviation value, Xdev-next, determined by use of the equation

$$\text{Xdev-next} = \min(\max[(\text{Xnorm-next} - \text{Xavg-pre} + 0,5), 0], 1) \tag{5}$$

wherein Xnorm-next is the normalized intensity value for the selected range cell within said next obtained radar image, and Xavg-pre is the moving average of the intensity value for the same selected range cell within the previous radar image.

By using the equations (4) or (5), the scaled deviation value is centered about 0,5 and scaled to be in the range of 0 to 1, making it suitable as input to a neural network for further processing. When centering about 0,5, the mean deviation value, that is no deviation, is 0,5, while positive deviation is represented by values larger than 0,5 and negative deviation is represented by values less than 0,5. Positive deviation is of particular interest since this represents additional reflected energy, which may represent an object to be tracked. Negative deviation is important as well, since the neural network may be trained to associate patterns consisting of both positive and negative deviation with rain or clutter. Thus, patterns, which are made up of neighboring range cells within consecutive following images, and which hold range cells with both positive and negative deviation values may be disregarded or filtered out when selecting patterns representing objects to be tracked.

In a possible implementation form, the system comprises image labeling circuitry for further processing of the deviation intensity values obtained from the first deviation process and the following number of deviation processes.

In a possible implementation form, the image labeling circuitry is configured to link or label neighboring range cells of a radar image into radar plots based on the obtained deviation intensity values of range cells located within said radar image.

In a possible implementation form, the image labeling circuitry is configured to:
linking each range cell within a radar image to a class label based on the obtained deviation intensity values for the range cells of said radar image.

In a possible implementation form, the image labeling circuitry is configured to hold a trained convolutional neural network, such as a so-called U-net, which is configured to perform a spatial analysis of the obtained deviation intensity values for the range cells within a radar image.

In a possible implementation form, the spatial analysis includes a final activation function yielding output intensity values in the range of 0 to 1 for each range cell within the radar image.

In a possible implementation form, the final activation function includes a sigmoid activation function.

In a possible implementation form, the image labeling circuitry is configured to perform, for each range cell within a radar image, a thresholding of the values being output from the neural network for the range cells, which thresholding classifies a range cell as a plot range cell or as a non-plot range cell.

A range cell classified as a plot cell may represent an object to be tracked and may be used for further evaluation in plot generation and object tracking.

In a possible implementation form, the image labeling circuitry is configured to linking neighboring plot range cells within a radar image to the same class label, whereby range cells having the same label form a radar plot.

In a possible implementation form, the image labeling circuitry is configured to link neighboring plot range cells to the same class label by use of connected component labeling.

In a possible implementation form, the image labeling circuitry is configured to output a sequential number of labelled radar images, wherein for a labelled radar image, linked plot range cells hold the same label.

In a possible implementation form, the detection coverage space is a full circular detection range, and wherein the processing circuitry is configured to divide the received radar data into a sequential number of circular radar images with each circular radar image corresponding to a full circular radar scan.

In a possible implementation form, each circular radar image holds a number of image lines defining a full circular radar image, with each image line corresponding to an azimuth orientation, and each image line holds a number of range cells, with the radial distance of a range cell within the image line corresponding to a range of radar scan detection, whereby the location of a range cell within a radar image is given by the azimuth orientation of the image line and the radial distance within the image line. The foregoing and other objects are achieved by the features of the independent claims. Further implementation forms are apparent from the dependent claims, the description and the figures. These and other aspects of the invention will be apparent from the embodiments described below.

BRIEF DESCRIPTION OF THE DRAWINGS

In the following detailed portion of the present disclosure, the invention will be explained in more detail with reference to the example embodiments shown in the drawings, in which:

Fig. 1 illustrates a radar image with image lines and range cells according to an example embodiment;

Fig. 2 is an overview flow diagram illustrating processing steps for processing incoming raw radar scan data into classified tracks according to a prior art example embodiment;

Fig. 3 is an overview flow diagram illustrating processing steps for processing incoming raw radar image scan data into classified tracks according to an example embodiment of the present disclosure;

Fig. 4 is an overview flow diagram illustrating processing steps for pre-processing incoming raw radar image scan data according to an example embodiment;

Fig. 5 is a flow diagram illustrating processing steps for an initialization process being part the pre-processing of Fig. 4 according to an example embodiment;

Fig. 6 is a flow diagram illustrating processing steps for a first deviation process being part the pre-processing of Fig. 4 according to an example embodiment;

Fig. 7 is a flow diagram illustrating processing steps for a following deviation process being part the pre-processing of Fig. 4 according to an example embodiment;

Fig. 8 shows processing blocks holding processing equations for determining normalized intensity values and moving average values according to an example embodiment;

Fig. 9 shows processing blocks holding processing equations for determining deviation values according to an example embodiment;

Fig. 10 is an overview flow diagram illustrating processing steps performed by an image labelling circuitry according to an example embodiment;

Fig. 11 is a block diagram illustrating data flow for pre-processing of incoming raw radar image scan data and image labelling of the pre-processed data according to an example embodiment; and

Fig. 12 is a schematic block diagram illustrating the basic structure of a scanning radar system according to an example embodiment.

DETAILED DESCRIPTION

While the present disclosure is intended to be capable of use with all types of radar systems, much of the disclosure will assume that the radar system is a fixed, rotating, monostatic, pulsed radar system for the sake of simplicity. The disclosure is, however, fully applicable to monostatic as well as bistatic and multistatic radar systems, pulsed radar systems as well as continuous wave radar systems, synthetic aperture systems, electronically scanned radars, and the like.

In an example radar system, a radar transmitter/receiver antenna rotates about a point and transmits radar pulses which travel outward from the antenna, interact with targets at some distance from the antenna, and, as a result, some energy is scattered back to the antenna due to the interaction and captured as an intensity, X, corresponding to a location, range (r), azimuth (θ) and time (t).

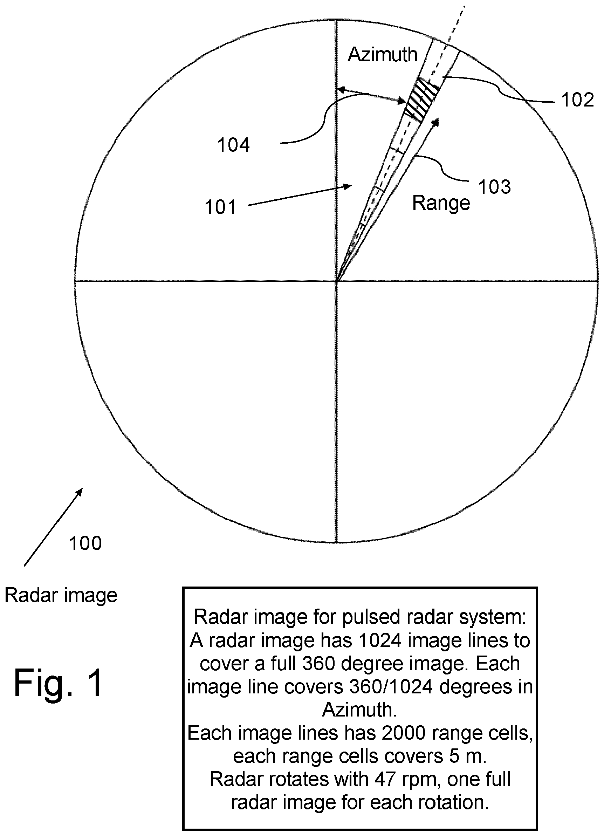

Fig. 1 illustrates a radar image 100 obtained from a rotating pulsed radar scan system according to an example embodiment. The radar image holds a number of range cells 102, where each range cell 102 has a location within an image line 101. The location of the range cell 102 is determined by the azimuth (θ) 104 of the image line 101 and the range (r) 103 of the range cell within the image line 101. The range cells 102 have corresponding radar data representing an intensity value X of received power of reflected radar wave signals corresponding to the location of the range cell 102 within the radar image 101.

As an example embodiment the pulsed radar system rotates with a rotation speed of 47 rounds per minute, rpm, with a full radar image being provided for each rotation. A radar image has 1024 image lines 101 to cover a full 360 degrees image, whereby each image line covers 360/1024 degrees = 0.3515625 degrees in Azimuth. Each image line 101 has 2000 range cells 102, where each range cells covers a detection range of 5 meters, m.

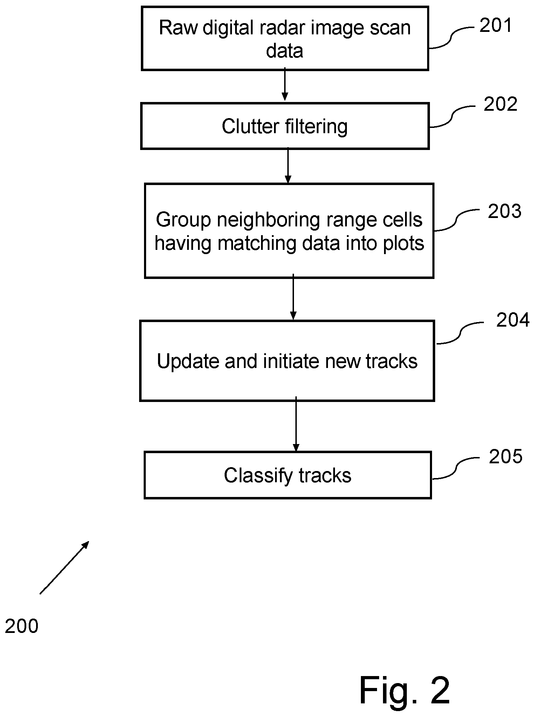

Fig. 2 is an overview flow diagram illustrating processing steps 200 for processing incoming raw radar scan data 201 into classified tracks 205 according to a prior art example embodiment. A radar system, such as the pulsed radar system discussed in connection with Fig. 1, performs a number of radar scans, and provides a corresponding number of raw radar scan data. The radar system holds processing circuitry for dividing the received radar data into a corresponding sequential number of radar images with range cells 102 holding raw digital radar image scan data, which scan data includes intensity values of received power of reflected radar wave signals. The intensity values of the range cells for each radar image is then passed through a clutter filtering process 202, which may comprise a static clutter filtering. For static clutter filtering the radar system should be run a while before normal operation in order to build up an average on intensity values for range cells of successive radar images. When into normal operation, range cells with intensity values higher than the corresponding average may be considered as representing an object to be tracked, and such neighboring range cells within the same radar image may be grouped into plots 203. A margin may be given to the determined average intensity values in the clutter filtering 202 in order to take into account some fluctuating clutter, such as semi-dynamic clutter. The obtained plots may then be used to initiate new tracks of detected objects and update the tracks 204. Finally, the obtained tracks may be classified 206 to represent different kinds of detected objects, such as birds or airplanes.

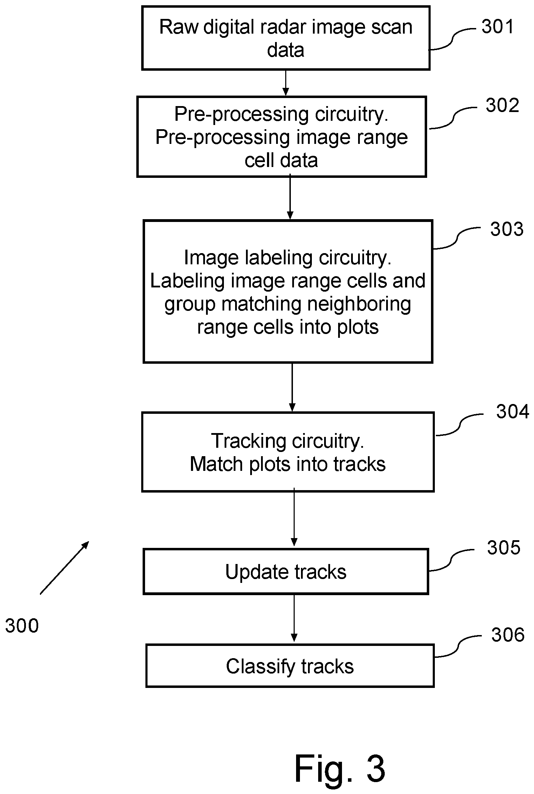

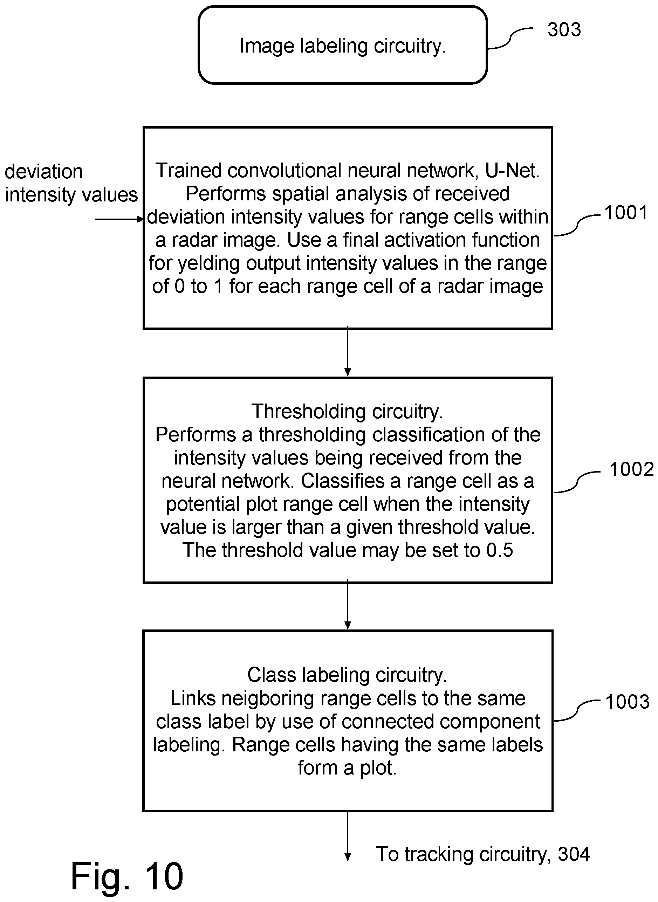

Fig. 3 is an overview flow diagram illustrating processing steps 300 for processing incoming raw radar image scan data 301 into classified tracks 306 according to an example embodiment of the present disclosure. A radar system, such as the pulsed radar system discussed in connection with Fig. 1, performs a number of radar scans, and provides a corresponding number of raw radar scan data. The radar system holds processing circuitry for dividing the received radar data into a corresponding sequential number of radar images with range cells 102 holding raw digital radar image scan data, which scan data includes intensity values of received power of reflected radar wave signals. The intensity values of the range cells for each radar image is then passed through steps of pre-processing performed by pre-processing circuitry 302, which results in a deviation value being determined for the intensity value of each range cells of the incoming radar images. The determined deviation values are passed on to an image labeling circuitry 303, which may hold a trained convolutional neural network, see 1001 of Fig. 10, and thresholding circuitry, see 1002 of Fig. 10, and class labeling circuitry, see 1003 of Fig. 10. The image labeling circuitry 303 may be trained or configured to distinguish range cells representing real detected objects from range cells representing clutter, such as fluctuating clutter, and further to label range cells identified as representing real detected objects into neighboring groups of plots labeled with the same classifier. The obtained plots may then be used to create tracks 304 of detected objects and update the tracks 305. Finally, the obtained tracks may be classified 306 to represent different kinds of detected objects, such as birds or airplanes.

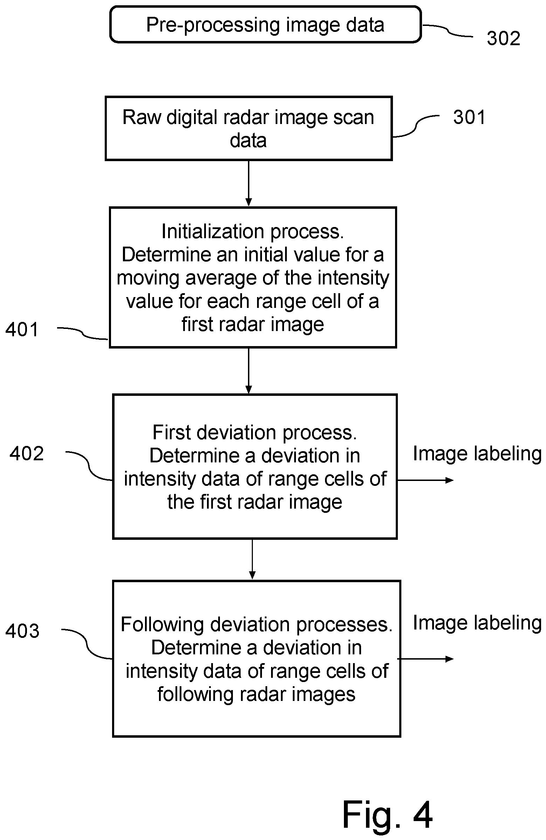

Fig. 4 is an overview flow diagram illustrating pre-processing steps being performed by pre-processing circuitry 302 of the radar system on the incoming raw radar image scan data 301 according to an example embodiment. The pre-processing includes calculations of a moving average of the intensity values for a range cell at a given location within a sequential number of radar images. In order to get these calculations started, it is necessary that the pre-processing circuitry is configured to perform an initialization process 401, which includes determining an initial value for a moving average of the intensity value for each range cell within a first radar image. When using a moving average of the intensity values, the moving average may be taken over a period with a high number of incoming scanned radar images. Whatever is done for the initial value of the moving average it assumes something about values prior to the available data and is necessarily in error. In view of this, the early results may be regarded as unreliable until the iterations have had time to converge. However, in order to facilitate further processing, it is preferred that the initial values of the moving average for the range cells are determined as a normalized moving average, which may have a value in the range from 0 to 1.

The outcome of the steps of pre-processing 302 is a deviation value being determined for the intensity value of each range cells of the incoming radar images. In order to get these calculations started, the pre-processing circuitry is configured to perform a first deviation process 402, which includes determining a first deviation value of the intensity value for each range cell within the first radar image. The obtained deviation intensity values may be used for further processing by the image labeling circuitry 303. Again, whatever is done for the first deviation values, the early results may be regarded as unreliable until the iterations have had time to converge. However, in order to facilitate further processing, it is preferred that the first deviation values of the intensity values the range cells of the first image are determined as scaled deviation values, which may have a value in the range from 0 to 1.

For the following deviation processes, which are performed for the following radar images, 403, the determination of the deviation value for a range cell within a radar image is based partly on a representation for the intensity value of the range cell and partly on the moving average of the intensity value of the range cell having the same location within the previously obtained radar image. Thus, as part of the first deviation process 402, the pre-processing circuitry may also be configured to determine a first value for the moving average of the intensity value for each range cell within the first radar image. For the following deviation processes 403, the pre-processing circuitry is then configured to, for each range cell having allocation within a following radar image, determine a next deviation value of the intensity value, which may be based partly on a presentation of the intensity value for the range cell having said location within said next radar image, and based partly on the previously obtained value for the moving average of the intensity value of the range cell having the same location within the previously obtained radar image. It is also here preferred that the next deviation values of the intensity value of the range cells of a next image are determined as scaled deviation values, which may have a value in the range from 0 to 1. As part of a following deviation process 403, the pre-processing circuitry is also configured to determine a new or next value for the moving average of the intensity value for each range cell within the next radar image, which new moving average value is to be used in the next following deviation process. Also, for the following deviation processes 403, the obtained deviation intensity values may be used for further processing by the image labeling circuitry 303.

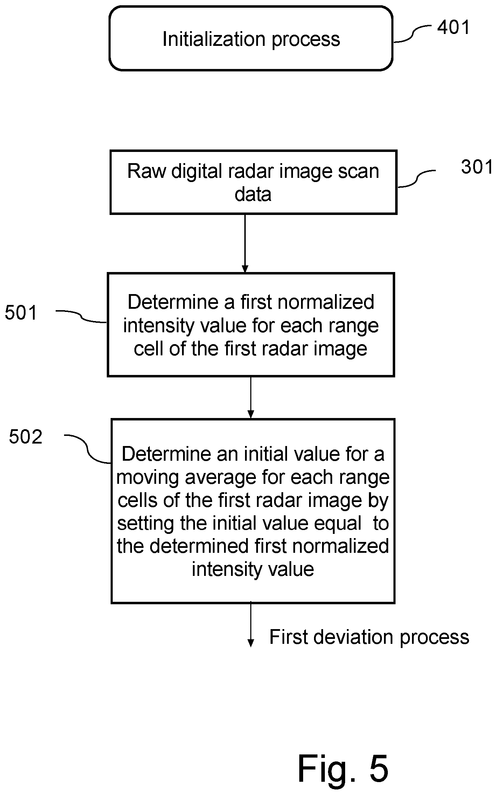

Fig. 5 is a flow diagram illustrating processing steps for an initialization process 401 being part of the pre-processing of Fig. 4 and being performed by pre-processing circuitry of the radar system on the incoming raw radar image scan data 301 according to an example embodiment. In this embodiment the pre-processing circuitry is configured to first determine a normalized intensity value for each range cell within the first radar image, step 501, which normalized intensity value may be considered as representing a first intensity value of the range cell, and then to determine the initial value for the moving average for each range cells of the first radar image by setting the initial value equal to the determined first normalized intensity value, step 502.

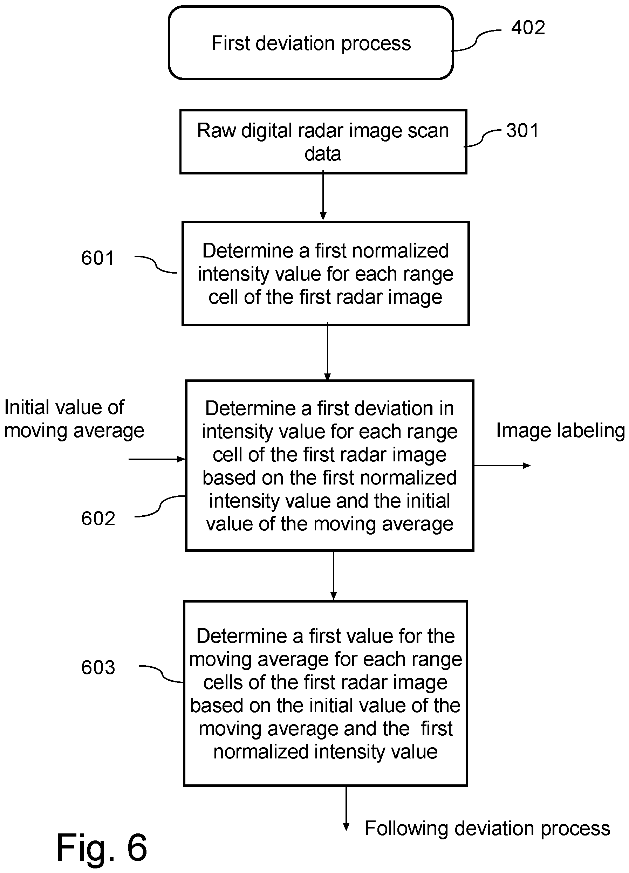

Fig. 6 is a flow diagram illustrating processing steps for a first deviation process 402 being part of the pre-processing of Fig. 4 and being performed by pre-processing circuitry of the radar system on the incoming raw radar image scan data 301 according to an example embodiment. In this embodiment the pre-processing circuitry is configured to first determine a first normalized intensity value for each range cell within the first radar image, step 601, which first normalized intensity value may be considered as representing a first intensity value of the range cell. In order to avoid calculating the normalized intensity value twice, the pre-processing circuitry may be configured to use the normalized intensity values determined for the first radar image at step 501 of the initialization process 402. The pre-processing circuitry is further configured to determine a first deviation in intensity value for each range cell of the first radar image, step 602, based on the first normalized intensity value and the initial value of the moving average, which may be the initial value determined at step 502 of the initialization process 401. The pre-processing circuitry is further configured to determine a first value for the moving average of the intensity value for each range cell within the first radar image based on the initial value of the moving average and the first normalized intensity value, step 603. The obtained first deviation intensity values, step 602, may be used for further processing by the image labeling circuitry 303.

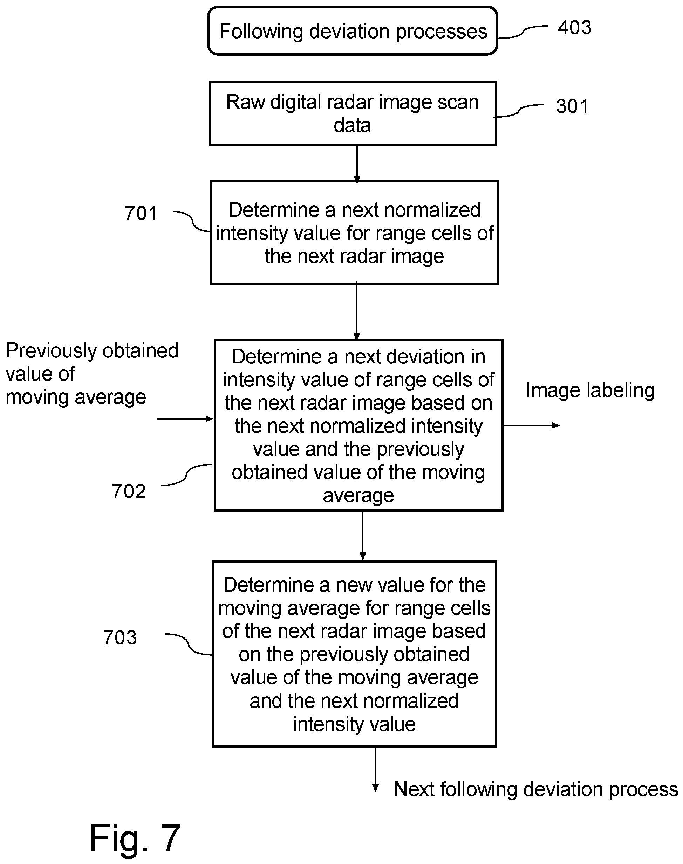

Fig. 7 is a flow diagram illustrating processing steps for a following deviation process 403 being part of the pre-processing of Fig. 4 and being performed by pre-processing circuitry of the radar system on the incoming raw radar image scan data 301 according to an example embodiment. In this embodiment the pre-processing circuitry is configured to first determine a next normalized intensity value for each range cell within the next radar image, step 701, which next normalized intensity value may be considered as representing a next intensity value of the range cell. The pre-processing circuitry is further configured to determine a next deviation in intensity value for each range cell of the next radar image, step 702, based on the obtained next normalized intensity value and the previously obtained value of the moving average, which for the second radar image may be the first value for the moving average determined at step 603 of the first deviation process 402. The pre-processing circuitry is further configured to determine a new or next value for the moving average of the intensity value for each range cell within the next radar image based on the previously obtained value of the moving average and the next normalized intensity value, step 703. The obtained next deviation intensity values, step 702, may be used for further processing by the image labeling circuitry 303.

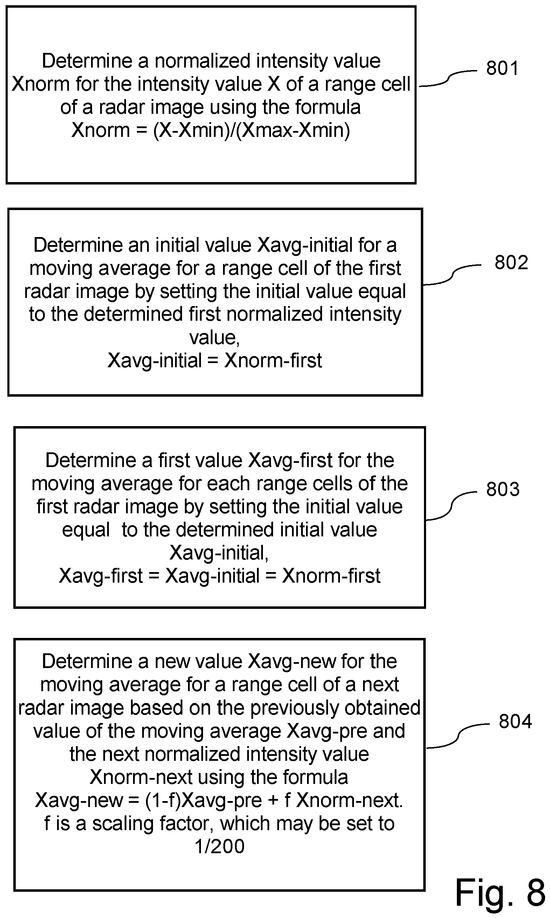

Fig. 8 shows processing blocks holding processing equations for determining normalized intensity values and moving average values according to an example embodiment.

Block 801 shows that the pre-processing circuitry may be configured to determine the first and next normalized intensity values for range cells of the first and following radar images by use of equation (1)

$$Xnorm = (X-Xmin)/(Xmax-Xmin), \qquad\qquad (1)$$

wherein X is the intensity value for the range cell, and Xmin and Xmax are the minimum and maximum intensity values, respectively, for all range cells of the radar image holding the range cell. By use of equation (1) the obtained normalized intensity value is within the range of 0 to 1, which is suitable for further digital processing. Equation (1) may be used for determining the normalized intensity values in steps 501, 601 and 701 of Figs. 5, 6 and 7.

Block 802 shows that the pre-processing circuitry may be configured to determine the initial value, Xavg-initial, for a moving average for a range cell of the first radar image by setting the initial value equal to the determined first normalized intensity value, Xavg-initial = Xnorm-first, which may be determined by use of equation (1). The obtained initial value, Xavg-initial, for a moving average may be used in step 502 of Fig. 5.

Block 803 shows that the pre-processing circuitry may be configured to determine the first value, Xavg-first, for the moving average for each range cells of the first radar image by setting the initial value equal to the determined initial value Xavg-initial, that is Xavg-first = Xavg-initial = Xnorm-first, which may be determined by use of equation (1).

However, it is also within an embodiment of the disclosure that the pre-processing circuitry is configured to determine first value for the moving average of the intensity value, Xavg-first, by use of equation (2)

$$\text{Xavg-first} = (1\text{-}f)\ \text{Xavg-initial} + f\ \text{Xnorm-first}, \qquad (2)$$

wherein Xnorm-first is the normalized intensity value for the selected range cell within the first obtained radar image, and Xavg-inital is the initial determined moving average of the intensity value for the same selected range cell within the first radar image, and f is a scaling factor, which is in the range of 1/300 to 1/50, such as 1/250 to 1/100, such as 1/200. When setting Xavg-initial = Xnorm-first, then the use of equation (2) also gives the result that Xavg-first = Xnorm-first. The obtained first value, Xavg-first, for the moving average may be used in step 603 of Fig. 6.

Block 804 shows that that the pre-processing circuitry may be configured to determine a new or next value for the moving average of the intensity value, Xavg-new by use of equation (3)

$$\text{Xavg-new} = (1\text{-}f)\ \text{Xavg-pre} + f\ \text{Xnorm-next}, \qquad (3)$$

wherein Xnorm-next is the normalized intensity value for the selected range cell within said next obtained radar image, and Xavg-pre is the moving average of the intensity value for the same selected range cell within the previous radar image, and f is a scaling factor, which is in the range of 1/300 to 1/50, such as 1/250 to 1/100, such as 1/200. The obtained new or next value, Xavg-new, for the moving average may be used in step 703 of Fig. 7.

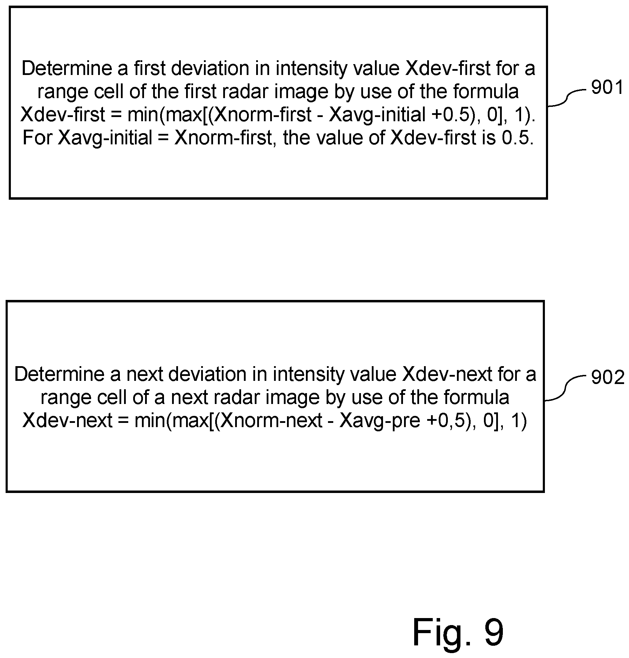

Fig. 9 shows processing blocks holding processing equations for determining deviation values according to an example embodiment.

Block 901 shows that the pre-processing circuitry may be configured to determine, for any selected range cell within the first obtained radar image, the first deviation value as a first scaled deviation value, Xdev-first, by use of equation (4)

$$\text{Xdev-first} = \min(\max[(\text{Xnorm-first} - \text{Xavg-initial} + 0{,}5), 0], 1) \qquad (4)$$

wherein Xnorm-first is the normalized intensity value for the selected range cell within said first obtained radar image, and Xavg-initial is the initial determined moving average of the intensity value for the same selected range cell within the first radar image. The scaling is performed in order to obtain deviation values within the range of 0 to 1 and centered around 0.5. By adding 0.5 to Y = (Xnorm-first - Xavg-initial), the deviation values get centered around 0.5, and by taking max[(Y + 0,5), 0], any values of (Y + 0.5) below 0 are substituted by 0, while using min(max[(Y + 0.5), 0)] 1), and any values of (Y + 0,5) above 1 are substituted by 1. The obtained scaled first deviation values, Xdev-first, may be used in step 602 of Fig. 6. When using Xavg-initial = Xnorm-first, the value of Xdev-first is 0.5, which can also be obtained without using equation (4), with the pre-processing circuitry being configured to use Xdev-first = 0.5 for all the range cells of the first image.

Block 902 shows that the pre-processing circuitry may be configured to determine, for any selected range cell within a next obtained radar image, the next deviation value as a next scaled deviation value, Xdev-next, by use of equation (5)

$$\text{Xdev-next} = \min(\max[(\text{Xnorm-next} - \text{Xavg-pre} + 0{,}5), 0], 1) \qquad (5)$$

wherein Xnorm-next is the normalized intensity value for the selected range cell within said next obtained radar image, and Xavg-pre is the moving average of the intensity value for the same selected range cell within the previous radar image. The scaling is performed in order to obtain next deviation values within the range of 0 to 1 and centered around 0.5. The obtained scaled next deviation values, Xdev-next, may be used in step 702 of Fig. 7.

By use of equation (5) the deviation in the intensity value of received power for a range cell of image (I) is determined as the deviation from the averaged of the received power for this range cell, which deviation is then centered around 0.5 and clipped to be in the range of 0 to 1. Range cells having a relatively high received intensity value X of received power, which indicate that the range cell may represent a true object to be tracked, will then have a value Xdev-next being higher than 0.5.

Fig. 10 is an overview flow diagram illustrating processing steps performed by an image labelling circuitry 303 according to an example embodiment.

The image labeling circuitry 303 of Fig. 10 is configured to hold a trained convolutional neural network, such as a so-called U-net, 1001, which is configured to perform a spatial analysis of the received deviation intensity values for the range cells within a radar image. The spatial analysis may include a final activation function yielding output intensity values in the range of 0 to 1 for each range cell within the radar image. The deviation intensity values may be obtained from the pre-processing circuitry 302 as output from the first and the following deviation processes, steps 602 and 702 of Fig. 6 and 7. From the above discussing on equations (4) and (5), the deviation values may be scaled deviation values centered around 0.5 and clipped to be in the range of 0 to 1.

The U-Net performs a spatial analysis using convolutions at different length scales.

The U-Net looks at incoming deviation intensity values for all range cells in a radar image in order to find certain patterns of range cells, which patterns hold a number of potential true plot range cells.

The U-net has been trained with a large number of example radar images. These images contain areas representing range cells having deviation intensity values corresponding to an above-average reflected energy. These areas may correspond to true object plots such as bird plots and vehicle plots but may also correspond to potential false plots caused by clutter or multi-path. The human eye can often distinguish true plots from false plots by looking at the environment of a range cell. Clutter for example is characterized by many peaks in deviation intensity values over a larger image area, while multi-path is characterized by having many high-deviation intensity values within a narrow azimuth range. Thus, clutter has a different spatial structure within a radar image than true plots. This is where the U-Net comes in.

The U-Net may use a sigmoid function as the final activation function. Thus, an output intensity value being output by the U-Net for a range cell of a radar image may be a nonlinear function of deviation intensity values in the neighborhood range cells of said range cell within the radar image, with the result of the nonlinear function being passed through a sigmoid activation function for yielding output values between 0 and 1.

The embodiment of an image labeling circuitry 303 illustrated in Fig. 10 is further configured to hold thresholding circuitry 1002. The thresholding circuitry 1002 is configured to perform, for each range cell within a radar image, a thresholding classification of the intensity values being received from the neural network 1001. This thresholding classification classifies a range cell as a potential plot range cell when the intensity value for the range cell being output from the neural network is larger than a given threshold value. The threshold value may be set to 0.5.

The image labeling circuitry 303 of Fig. 10 is further configured to hold a class labeling circuitry 1003. The class labeling circuitry 1003 is configured to link neighboring potential plot range cells within a radar image to the same class label, whereby range cells having the same label form a plot. The class labeling circuitry 1003 may be configured to link neighboring plot range cells to the same class label by use of connected component labeling. The class labeling circuitry 1003 is also configured to output a sequential number of labelled radar images, where a labelled radar image may hold a number of plots formed by equally labeled potential plot range cells.

The class labeling circuitry 1003 may be configured to link or connect two neighboring potential plot range cells if they are horizontal or vertical located neighbors. It is preferred that they are not connected if they are only diagonally connected or linked (i.e. corners are touching). Two not-connected plot range cells may still be part of the same labeled class of plot range cells if there is a connecting path between them. E.g. consider three range cells: A, B, and C. A and C are not connected. However, if all three are plot range cells they may become part of the same labeled class if there is a connecting path through B.

In a preferred embodiment, a label is an integer, 1-n, for n distinct labeled class groups. The integer 0 is reserved for range cells being classified as non-plot range cells, and thus representing background. The labeled radar image has the same dimensions as the original input radar image, but now holds integers. Example 1 is an ascii-art example of a labeled radar image holding three plots, labelled by the integers 1, 2 and 3, respectively:

```
000000000000
000110000000
001111000000
000010002000
000000022200
000000000000
000333330000
003333330000
000333333000
000003300000
```

000000000000

Example 1

After replacing the zeros with spaces, the labelled range cells defining the three plots may be more clearly visualized, see Example 2:

<pre>
         11
        1111
         1  2
         222


        33333
       333333
       333333
        33
</pre>

Example 2

The labelled images may now be used for track generation, where matching plots of consecutive images is used to form a track of a detected object. The plot range cells may be associated with data on intensity of return energy, range and azimuth, where range and azimuth are given by the location of the plot range cell within the radar image, and where intensity of return energy is a function of the Radar Cross-Section, RCS, which is correlated with the size of the detected object. A large bird having a large RSC may be represented by several neighboring high intensity range cells within a plot, while a plot holding range cells representing multiple peaks in intensity value my indicate a flock of birds.

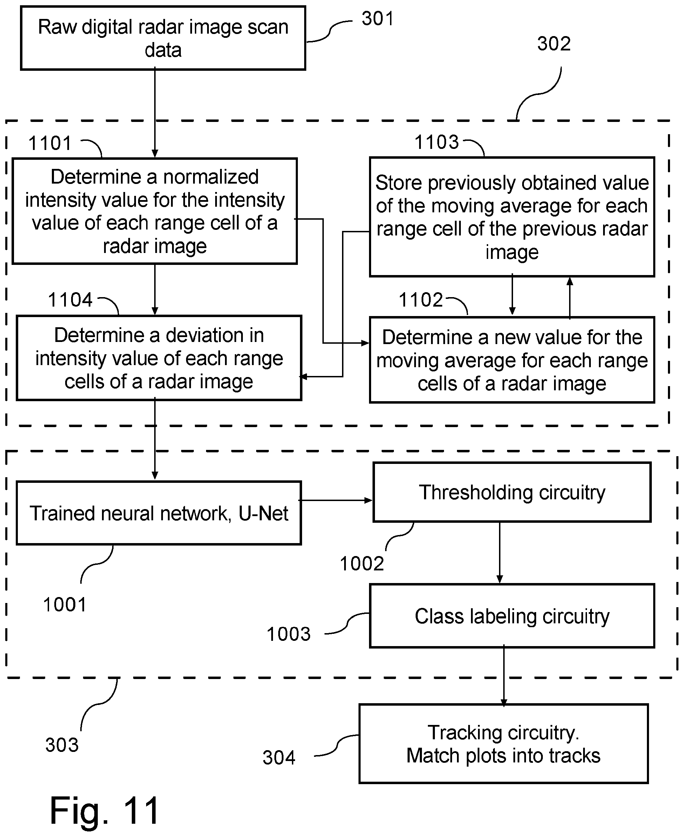

Fig. 11 is a block diagram illustrating data flow for pre-processing of incoming raw radar image scan data and image labelling of the pre-processed data according to an example embodiment.

The raw digital radar image scan data 301 is received by the pre-processing circuitry 302. The first operation performed by the pre-processing circuitry 302 is to determine a normalized intensity value for the intensity value of each range cell of an incoming radar image, block 1101. The normalized intensity value may be determined by use of equation (1), see also block 801 of Fig. 8. The normalized intensity values are passed on to block 1102, in order to be used for determining a new or next value for the moving average for each range cells of a radar image.

For the initialization process, 401, the initial value of the moving average for a range cell of the first radar image is set equal to the normalized intensity value determined for this range cell within the first radar image, see also step 502 of Fig. 5 and block 802 of Fig. 8. The obtained initial values of the moving average are passed on to block 1103, in order to be stored as previously obtained values of the moving average for each range cell of the previous radar image.

For the first deviation process of the first image, 402, the normalized intensity values obtained in block 1101 and the initial moving average values stored in block 1103 are passed on to block 1104, in order to be used for determining a deviation in intensity value of each range cells of the first radar image, see also step 602 of Fig. 6. The deviation in intensity values for the range cells of the first image may be set equal to 0.5, which corresponds to the initial moving average values being set equal to the normalized intensity values of the first image when using equation (4), see also block 901 of Fig. 9. The first deviation process also includes the determination of a first or new or next value for the moving average for each range cell of the first image. This is performed in block 1102, which now has the normalized intensity values for the first image and the stored initial values of the moving average as inputs. The first or new or next values for the moving average for the range cell of the first image may be determined by use of equation (2), see also block 803 of Fig. 8. When setting the initial values of the moving average equal to the first normalized intensity values, then from equation (2) the first values for the moving average also become equal to the first normalized intensity values. Thus, the pre-processing circuitry may be configured to set the first values for the moving average equal to the first normalized intensity values without using equation (2). The obtained first or new or next values for the moving average are stored at block 1103 to be used for determining the deviation in intensity values for the second and following radar image.

The obtained deviation in intensity values for the range cells of the first image are passed on to the image labeling circuitry 303 and received by the trained neural network, U-Net, block 1001, which is described in connection with Fig. 10.

For the following deviation process of the following next image, 403, the normalized intensity values obtained in block 1101 and the previously obtained moving average values stored in block 1103 are passed on to block 1104, in order to be used for determining a next deviation in intensity value of each range cells of the next radar image, see also step 702 of Fig. 7. The next deviation in intensity values for the range cells of the following next image may be determined by use of equation (5), see also block 902 of Fig. 9. The following deviation process also includes the determination of a new or next value for the moving average for each range cell of the next image. This is performed in block 1102, which now has the normalized intensity values for the next image and the stored previously obtained values of the moving average as inputs. The new or next values for the moving average for the range cell of the next image may be determined by use of equation (3), see also block 804 of Fig. 8. The obtained new or next values for the moving average are stored at block 1103 to be used for determining the deviation in intensity values for a following radar image.

The obtained next deviation in intensity values for the range cells of the next image are passed on to the image labeling circuitry 303 and received by the trained neural network, U-Net, block 1001, which is described in connection with Fig. 10.

It is noted that the following deviation process is performed for each of a following next radar image within an obtained sequential number of radar images.

The obtained deviation in intensity values for each radar image are processed by the trained neural network, U-Net, 1001, with the processed result being passed on to the thresholding circuitry, 1002, which is described in connection with Fig. 10, and the processed result from the thresholding circuitry 1002 being passed on to the class labeling circuitry 1003, which is described in connection with Fig. 10. The output from the class labeling circuitry 1003, which is also the output from the image labeling circuitry 303, may be passed on to the tracking circuitry, 304, where labeled plots may be match into tracks of detected objects.

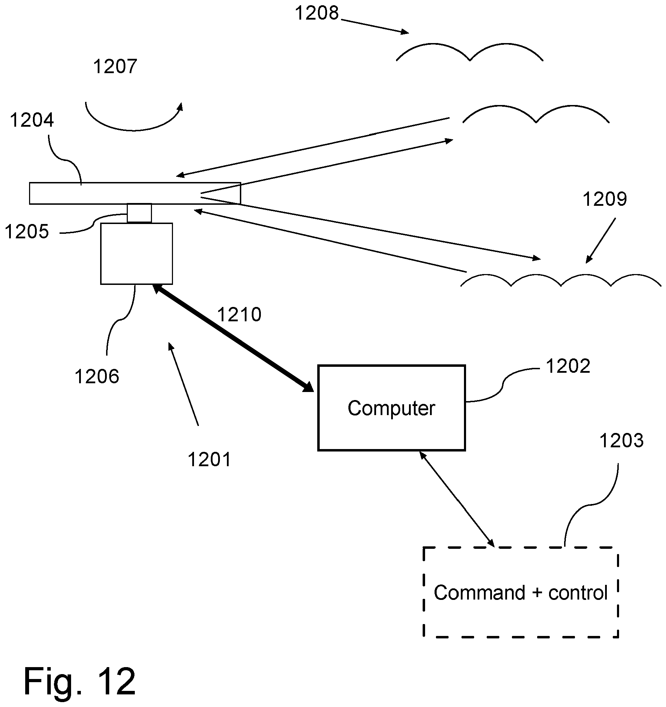

Fig. 12 is a schematic block diagram illustrating the basic structure of a scanning radar system according to an example embodiment. The system comprises a rotating pulsed radar system 1201 electronically connected to a computer system 1202. Generated output data may be communicated to an external command and control system 1203.

The computer system 1202 receives radar data representing a sequential number of radar scans. The computer system 1202 holds processing circuitry configured to divide the received radar data into a sequential number of radar images corresponding to the sequential number of radar scans, and configured to subdivide a radar image into a plurality of range cells, whereby each range cell has a location within the radar image, and wherein each range cell has radar data representing an intensity value of received power of reflected radar wave signals corresponding to the location of the range cell within the radar image. The computer system 1202 further holds pre-processing circuitry 302 and image labeling circuitry 303, with the pre-processing circuitry 302 configured to pre-process the obtained intensity values for range cells of the sequential number of the radar images to serve as input to the image labeling circuitry 303. The pre-processing of intensity value data may comprise an initialization process 401, a first deviation process 402 for the first radar image, and a following number of deviation processes 403 for each of the following next radar images within the obtained sequential number of radar images.

The radar system 1201 holds a single slotted waveguide antenna 1204 for transmitting a fan beam having a high resolution in azimuth and low resolution in elevation, and for receiving reflected radar wave signals. The antenna 1204 is mounted to an upright support 1205, which is rotatably mounted to a horizontal support 1206, where the horizontal support is configured for rotating 1207 the upright 1205 with the antenna 1204 at a rotational speed of 47 rounds per minute, rpm. An azimuth encoder may be provided at the horizontal support 1206, which encoder may be configured for encoding and communicating the degree of rotation, and thereby the azimuth angle, of the antenna 1204. The targets or objects being exposed to the radar signals may include one or more birds 1208, but also the sea with waves 1209 below the birds 1208 may be exposed to the radar signals, due to the fan beam shape of the transmitted radar signals having a low resolution in elevation. The radar wave signals being reflected from the waves 1209 may represent sea clutter, which preferably should be removed in order to keep track of detected birds 1208.

The radar system 1201 may hold electronic front end circuitry, which is also provided at support 1206, for feeding the antenna 1204 and for receiving radar return signals being received by the antenna 1204. The front end circuitry may be electronically connected to back end circuitry being part of the azimuth encoder for communicating the azimuth angle. The front end circuitry and the back end circuitry are electronically connected to the computer system 1202 via a cable 1210, whereby the processing circuitry of the computer system 1202, the front end circuitry and the back end circuitry together provide processing circuitry for processing signals forwarded to and received from the antenna system 1201 and for generating radar plots. The processing circuitry of the computer system 1202 may also perform the processing for generating object tracks based on the plots and for classifying the objects of the tracks.

The invention has been described in conjunction with various embodiments herein. In the claims, the word "comprising" does not exclude other elements or steps, and the indefinite article "a" or "an" does not exclude a plurality.

**Claims**

1. A system for processing radar data representing intensity values of received power of reflected radar wave signals for a sequential number of radar scans of a detection coverage space, said system comprising:

   receiving circuitry configured to receive radar data representing said sequential number of radar scans;
   processing circuitry configured to divide the received radar data into a sequential number of radar images corresponding to the sequential number of radar scans, and configured to subdivide a radar image into a plurality of range cells, whereby each range cell has a location within the radar image, and wherein each range cell has radar data representing an intensity value of received power of reflected radar wave signals corresponding to the location of the range cell within the radar image; and
   pre-processing circuitry (302) configured to pre-process the obtained intensity values for range cells of the sequential number of the radar images, said pre-processing of intensity value data comprising:

   a first deviation process (402) for the first radar image, and a following number of deviation processes (403) for each of the following next radar images within the obtained sequential number of radar images;
   wherein the first deviation process (402) for each range cell having a location within the first radar image comprises:

   determining (502) an initial value for a moving average of the intensity value for each range cell within the first radar image;
   determining (601) a first intensity value based at least partly on the intensity value of the range cell;
   determining (602) a first deviation value from the moving average of the intensity value of the range cell based at least partly on the obtained first intensity value and the obtained initial value for the moving average of the intensity value of the range cell; and
   determining (603) a first value for the moving average of the intensity value of the range cell based at least partly on the obtained initial value for the moving average and the obtained first intensity value;
   wherein the following number of deviation processes (403) for each of the following next obtained radar images comprises:
   for each range cell having a location within a following next obtained radar image, then:

   determining (701) a next intensity value based at least partly on the intensity value of the range cell having said location within said next radar image;
   determining (702) a next deviation value from the moving average of the intensity value of the range cell based at least partly on the obtained next intensity value for the range cell having said location within said next radar image and a previously obtained value for the moving average of the intensity value of the range cell having the same location within the previously obtained radar image; and
   determining (703) a next value for the moving average of the intensity value of the range cell based at least partly on the obtained next intensity value for the range cell having said location within said next image and the previously obtained value for the moving average of the intensity value of the range cell having the same location within the previously obtained radar image.

2. A system according to any claim 1, wherein the determination (702) of the next deviation value for a range cell at a location within a next radar image includes a subtraction of said previously obtained value for the moving average of the intensity value from the obtained next intensity value for the range cell having said location within said next radar image.

3. A system according to claim 1 or 2, wherein the next value for the moving average of the intensity value for a range cell is determined (703) as an exponential moving average value.

4. A system according to any one of the claims 1 to 3, wherein the first intensity value for each of the range cells within the first radar image is determined (601) as a first normalized intensity value based at least partly on the intensity value of said range cell and determined maximum and minimum intensity values for all the range cells of the first radar image.

5. A system according to any one of the claims 1 to 4, wherein the next intensity value for each of the range cells having a location within a following next obtained radar image is determined (701) as a next normalized intensity value based at least partly on the intensity value of the range cell having said location within said next radar image and determined maximum and minimum intensity values for all the range cells of said next radar image.

6. A system according to any one of the claims 1 to 5, wherein the first deviation value for each of the range cells within the first radar image is determined (602) as a first scaled deviation value.

7. A system according to any one of the claims 1 to 6, wherein the next deviation value for each of the range cells having a location within a following next obtained radar image is determined (702) as a next scaled deviation value.

8. A system according to any one of the claims 1 to 7, wherein the first value for the moving average of the intensity value for each range cell within the first radar image is equal to the obtained first intensity value of the range cell.

9. A system according to any one of the claims 1 to 8, wherein the first intensity value for a range cell is determined (601) as a first normalized intensity value, Xnorm-first, being determined by use of the equation

$$Xnorm\text{-}first = (X\text{-}Xmin)/(Xmax\text{-}Xmin),$$

wherein X is the intensity value for the range cell, and Xmin and Xmax are the minimum and maximum intensity values, respectively, for all range cells of the first radar image.

10. A system according to claim 9, wherein for any selected range cell within the first obtained radar image, the first value for the moving average of the intensity value, Xavg-first is determined (603) by use of the equation

$$Xavg\text{-}first = Xnorm\text{-}first,$$

wherein Xnorm-first is the normalized intensity value for the selected range cell within the first obtained radar image.

11. A system according to any one of the claims 1 to 10, wherein the next intensity value for a range cell is determined (701) as a next normalized intensity value, Xnorm-next, by use of the equation

$$Xnorm\text{-}next = (X\text{-}Xmin)/(Xmax\text{-}Xmin),$$

wherein X is the intensity value for the range cell, and Xmin and Xmax are the minimum and maximum intensity values, respectively, for all range cells of the radar image holding the range cell.

12. A system according to claim 11, wherein for any selected range cell within a next obtained radar image, the next value for the moving average of the intensity value, Xavg-new is determined (703) by use of the equation

$$Xavg\text{-}new = (1\text{-}f)\ Xavg\text{-}pre + f\ Xnorm\text{-}next,$$

wherein Xnorm-next is the normalized intensity value for the selected range cell within said next obtained radar image, and Xavg-pre is the moving average of the intensity value for the same selected range cell within the previous radar image, and f is a scaling factor, which is in the range of 1/300 to 1/50.

13. A system according to claim 12, wherein the scaling factor f is in the range of 1/250 to 1/100, such as about 1/200.

14. A system according to any one of the claims 1 to 13, wherein for any selected range cell within the first obtained radar image, the first deviation value, Xdev-first, is determined (602) by use of the equation Xdev-first = 0,5.

15. A system according to any one of the claims 1 to 14, wherein for any selected range cell within a next obtained radar image, the value of the next deviation value is determined (702) as a next scaled deviation value, Xdev-next, determined by use of the equation

$$Xdev\text{-}next = min(max[(Xnorm\text{-}next - Xavg\text{-}pre + 0,5), 0], 1)$$

wherein Xnorm-next is the normalized intensity value for the selected range cell within said next obtained radar image, and Xavg-pre is the moving average of the intensity value for the same selected range cell within the previous radar image.

16. A system according to any one of the claims 1 to 15, wherein the system further comprises image labeling circuitry (303) for further processing of the deviation intensity values obtained from the first deviation process (402) and the following number of deviation processes (403).

17. A system according to claim 16, wherein the image labeling circuitry (303) is configured to link or label neighboring range cells of a radar image into radar plots based on the obtained deviation intensity values of range cells located within said radar image.

18. A system according to claim 16 or 17, wherein the image labeling circuitry (303) is configured to:
linking each range cell within a radar image to a class label based on the obtained deviation intensity values for the range cells of said radar image.

19. A system according to any one of the claims 16 to 18, wherein the image labeling circuitry (303) is configured to hold a trained convolutional neural network, such as a so-called U-net, which is configured to perform a spatial analysis of the obtained deviation intensity values for the range cells within a radar image, said spatial analysis including a final activation function yielding output intensity values in the range of 0 to 1 for each range cell within the radar image.

20. A system according to claim 19, wherein the image labeling circuitry (303) is configured to perform, for each range cell within a radar image, a thresholding of the values being output from the neural network for the range cells, which thresholding classifies a range cell as a plot range cell or as a non-plot range cell.

21. A system according to claim 20, wherein the image labeling circuitry (303) is configured to linking neighboring plot range cells within a radar image to the same class label, whereby range cells having the same label form a radar plot.

22. A system according to claim 20, wherein the image labeling circuitry (303) is configured to output a sequential number of labelled radar images, wherein for a labelled radar image, linked plot range cells hold the same label.

23. A system according to any one of the claims 1 to 22, wherein the detection coverage space is a full circular detection range, and wherein the processing circuitry is configured to divide the received radar data into a sequential number of circular radar images with each circular radar image corresponding to a full circular radar scan.

**Patentansprüche**

1. System zum Verarbeiten von Radardaten, die Intensitätswerte der empfangenen Leistung von reflektierten Radarwellensignalen für eine sequenzielle Anzahl von Radarabtastungen eines Erfassungsabdeckungsraums darstellen, wobei das System Folgendes umfasst:

   Empfangsschaltung, die dazu konfiguriert ist, Radardaten zu empfangen, welche die sequenzielle Anzahl von Radarabtastungen darstellen;
   Verarbeitungsschaltung, die dazu konfiguriert ist, die empfangenen Radardaten in eine sequentielle Anzahl von Radarbildern zu unterteilen, die der sequentiellen Anzahl von Radarabtastungen entspricht, und dazu konfiguriert ist, ein Radarbild in eine Vielzahl von Bereichszellen zu unterteilen, wobei jede Bereichszelle eine Position innerhalb des Radarbildes aufweist, und wobei jede Bereichszelle Radardaten aufweist, die einen Intensitätswert einer empfangenen Leistung von reflektierten Radarwellensignalen darstellen, die der Position der Bereichszelle innerhalb des Radarbildes entspricht; und
   Vorverarbeitungsschaltung (302), die dazu konfiguriert ist, die erhaltenen Intensitätswerte für Bereichszellen der sequentiellen Anzahl der Radarbilder vorzuverarbeiten, wobei das Vorverarbeiten von Intensitätswertdaten Folgendes umfasst:

   einen ersten Abweichungsprozess (402) für das erste Radarbild und eine folgende Anzahl von Abweichungsprozessen (403) für jedes der folgenden nächsten Radarbilder innerhalb der erhaltenen sequentiellen Anzahl von Radarbildern;
   wobei der erste Abweichungsprozess (402) für jede Bereichszelle mit einer Position innerhalb des ersten Radarbildes Folgendes umfasst:

Bestimmen (502) eines Anfangswertes für einen gleitenden Durchschnitt des Intensitätswertes für jede Bereichszelle innerhalb des ersten Radarbildes;

Bestimmen (601) eines ersten Intensitätswertes, basierend zumindest teilweise auf dem Intensitätswert der Bereichszelle;

Bestimmen (602) eines ersten Abweichungswertes von dem gleitenden Durchschnitt des Intensitätswertes der Bereichszelle, basierend zumindest teilweise auf dem erhaltenen ersten Intensitätswert und dem erhaltenen Anfangswert für den gleitenden Durchschnitt des Intensitätswertes der Bereichszelle; und

Bestimmen (603) eines ersten Werts für den gleitenden Durchschnitt des Intensitätswertes der Bereichszelle, basierend zumindest teilweise auf dem erhaltenen Anfangswert für den gleitenden Durchschnitt und dem erhaltenen ersten Intensitätswert;

wobei die folgende Anzahl von Abweichungsprozessen (403) für jedes der folgenden nächsten erhaltenen Radarbilder Folgendes umfasst:

für jede Bereichszelle mit einer Position innerhalb eines folgenden nächsten erhaltenen Radarbildes, dann:

Bestimmen (701) eines nächsten Intensitätswertes, basierend zumindest teilweise auf dem Intensitätswert der Bereichszelle mit der Position innerhalb des nächsten Radarbildes;

Bestimmen (702) eines nächsten Abweichungswertes von dem gleitenden Durchschnitt des Intensitätswertes der Bereichszelle, basierend zumindest teilweise auf dem erhaltenen nächsten Intensitätswert für die Bereichszelle mit der Position innerhalb des nächsten Radarbildes und einem zuvor erhaltenen Wert für den gleitenden Durchschnitt des Intensitätswertes der Bereichszelle mit der gleichen Position innerhalb des zuvor erhaltenen Radarbildes; und

Bestimmen (703) eines nächsten Werts für den gleitenden Durchschnitt des Intensitätswertes der Bereichszelle, basierend zumindest teilweise auf dem erhaltenen nächsten Intensitätswert für die Bereichszelle mit der Position innerhalb des nächsten Bildes und dem zuvor erhaltenen Wert für den gleitenden Durchschnitt des Intensitätswertes der Bereichszelle mit der gleichen Position innerhalb des zuvor erhaltenen Radarbildes.

2. System nach Anspruch 1, wobei die Bestimmung (702) des nächsten Abweichungswertes für eine Bereichszelle an einer Position innerhalb eines nächsten Radarbildes eine Subtraktion des zuvor erhaltenen Wertes für den gleitenden Durchschnitt des Intensitätswertes von dem erhaltenen nächsten Intensitätswert für die Bereichszelle mit der Position innerhalb des nächsten Radarbildes enthält.

3. System nach Anspruch 1 oder 2, wobei der nächste Wert für den gleitenden Durchschnitt des Intensitätswertes für eine Bereichszelle als ein exponentieller gleitender Durchschnittswert bestimmt (703) wird.

4. System nach einem der Ansprüche 1 bis 3, wobei der erste Intensitätswert für jede der Bereichszellen innerhalb des ersten Radarbildes als ein erster normalisierter Intensitätswert bestimmt wird (601), basierend zumindest teilweise auf dem Intensitätswert der Bereichszelle und den bestimmten maximalen und minimalen Intensitätswerten für alle Bereichszellen des ersten Radarbildes.

5. System nach einem der Ansprüche 1 bis 4, wobei der nächste Intensitätswert für jede der Bereichszellen mit einer Position innerhalb eines folgenden nächsten erhaltenen Radarbildes als ein nächster normalisierter Intensitätswert bestimmt wird (701), basierend zumindest teilweise auf dem Intensitätswert der Bereichszelle mit der Position innerhalb des nächsten Radarbildes und den bestimmten maximalen und minimalen Intensitätswerten für alle Bereichszellen des nächsten Radarbildes.

6. System nach einem der Ansprüche 1 bis 5, wobei der erste Abweichungswert für jede der Bereichszellen innerhalb des ersten Radarbildes als ein erster skalierter Abweichungswert bestimmt (602) wird.

7. System nach einem der Ansprüche 1 bis 6, wobei der nächste Abweichungswert für jede der Bereichszellen mit einer Position innerhalb eines folgenden nächsten erhaltenen Radarbildes als ein nächster skalierter Abweichungswert bestimmt (702) wird.

8. System nach einem der Ansprüche 1 bis 7, wobei der erste Wert für den gleitenden Durchschnitt des Intensitätswertes für jede Bereichszelle innerhalb des ersten Radarbildes gleich dem erhaltenen ersten Intensitätswert der Bereichszelle ist.

9. System nach einem der Ansprüche 1 bis 8, wobei der erste Intensitätswert für eine Bereichszelle als ein erster normalisierter Intensitätswert, Xnorm-first, bestimmt wird (601), der unter Verwendung der Gleichung

$$\texttt{Xnorm-first = (X-Xmin)/(Xmax-Xmin) bestimmt wird,}$$

wobei X der Intensitätswert für die Bereichszelle ist und Xmin und Xmax die minimalen bzw. maximalen Intensitätswerte für alle Bereichszellen des ersten Radarbildes sind.

10. System nach Anspruch 9, wobei für jede ausgewählte Bereichszelle innerhalb des ersten erhaltenen Radarbildes der erste Wert für den gleitenden Durchschnitt des Intensitätswertes, Xavg-first, bestimmt wird (603), unter Verwendung der Gleichung

$$\texttt{Xavg-first = Xnorm-first,}$$

wobei Xnorm-first der normalisierte Intensitätswert für die ausgewählte Bereichszelle innerhalb des ersten erhaltenen Radarbildes ist.

11. System nach einem der Ansprüche 1 bis 10, wobei der nächste Intensitätswert für eine Bereichszelle als ein nächster normalisierter Intensitätswert, Xnorm-next, bestimmt wird (701), unter Verwendung der Gleichung

$$\texttt{Xnorm-next = (X-Xmin)/(Xmax-Xmin),}$$

wobei X der Intensitätswert für die Bereichszelle ist und Xmin und Xmax die minimalen bzw. maximalen Intensitätswerte für alle Bereichszellen des Radarbildes sind, das die Bereichszelle enthält.

12. System nach Anspruch 11, wobei für jede ausgewählte Bereichszelle innerhalb eines nächsten erhaltenen Radarbildes der nächste Wert für den gleitenden Durchschnitt des Intensitätswertes, Xavg-neu, bestimmt wird (703), unter Verwendung der Gleichung

$$\texttt{Xavg-new = (1-f) Xavg-pre + f Xnorm-next,}$$

wobei Xnorm-next der normalisierte Intensitätswert für die ausgewählte Bereichszelle innerhalb des nächsten erhaltenen Radarbildes ist und Xavg-pre der gleitende Durchschnitt des Intensitätswertes für dieselbe ausgewählte Bereichszelle innerhalb des vorherigen Radarbildes ist und f ein Skalierungsfaktor ist, der in dem Bereich von 1/300 bis 1/50 liegt.

13. System nach Anspruch 12, wobei der Skalierungsfaktor f in dem Bereich von 1/250 bis 1/100 liegt, wie etwa bei 1/200.

14. System nach einem der Ansprüche 1 bis 13, wobei für jede ausgewählte Bereichszelle innerhalb des ersten erhaltenen Radarbildes der erste Abweichungswert, Xdev-first, unter Verwendung der Gleichung Xdev-first = 0,5 bestimmt wird (602).

15. System nach einem der Ansprüche 1 bis 14, wobei für jede ausgewählte Bereichszelle innerhalb eines nächsten erhaltenen Radarbildes der Wert des nächsten Abweichungswertes als ein nächster skalierter Abweichungswert, Xdev-next, bestimmt wird (702), der unter Verwendung der Gleichung

$$\texttt{Xdev-next = min(max[(Xnorm-next - Xavg-pre + 0,5), 0], 1)}$$

bestimmt wird, wobei Xnorm-next der normalisierte Intensitätswert für die ausgewählte Bereichszelle innerhalb des nächsten erhaltenen Radarbildes ist und Xavg-pre der gleitende Durchschnitt des Intensitätswertes für dieselbe ausgewählte Bereichszelle innerhalb des vorherigen Radarbildes ist.

16. System nach einem der Ansprüche 1 bis 15, wobei das System ferner eine Bildkennzeichnungsschaltung (303) zum weiteren Verarbeiten der Abweichungsintensitätswerte umfasst, die aus dem ersten Abweichungsprozess (402) und der folgenden Anzahl von Abweichungsprozessen (403) erhalten werden.

**17.** System nach Anspruch 16, wobei die Bildkennzeichnungsschaltung (303) dazu konfiguriert ist, benachbarte Bereichszellen eines Radarbildes in Radardiagramme zu verknüpfen oder zu kennzeichnen, basierend auf den erhaltenen Abweichungsintensitätswerten von Bereichszellen, die sich innerhalb des Radarbildes befinden.

**18.** System nach Anspruch 16 oder 17, wobei die Bildkennzeichnungsschaltung (303) zu Folgendem konfiguriert ist: Verknüpfen jeder Bereichszelle innerhalb eines Radarbildes mit einer Klassenbezeichnung basierend auf den erhaltenen Abweichungsintensitätswerten für die Bereichszellen des Radarbildes.

**19.** System nach einem der Ansprüche 16 bis 18, wobei die Bildkennzeichnungsschaltung (303) dazu konfiguriert ist, ein trainiertes neuronales Faltungsnetzwerk, wie etwa ein sogenanntes U-Netz, zu halten, das dazu konfiguriert ist, eine räumliche Analyse der erhaltenen Abweichungsintensitätswerte für die Bereichszellen innerhalb eines Radarbildes durchzuführen, wobei die räumliche Analyse eine abschließende Aktivierungsfunktion enthält, die Ausgangsintensitätswerte in dem Bereich von 0 bis 1 für jede Bereichszelle innerhalb des Radarbildes liefert.

**20.** System nach Anspruch 19, wobei die Bildkennzeichnungsschaltung (303) dazu konfiguriert ist, für jede Bereichszelle innerhalb eines Radarbildes eine Schwellenwertbildung der Werte durchzuführen, die von dem neuronalen Netzwerk für die Bereichszellen ausgegeben werden, wobei die Schwellenwertbildung eine Bereichszelle als eine Diagramm-Bereichszelle oder als eine Nicht-Diagramm-Bereichszelle klassifiziert.

**21.** System nach Anspruch 20, wobei die Bildkennzeichnungsschaltung (303) dazu konfiguriert ist, benachbarte Plot-Bereichszellen innerhalb eines Radarbildes mit derselben Klassenbezeichnung zu verknüpfen, wodurch Bereichszellen mit derselben Bezeichnung ein Radardiagramm bilden.

**22.** System nach Anspruch 20, wobei die Bildkennzeichnungsschaltung (303) dazu konfiguriert ist, eine sequenzielle Anzahl von gekennzeichneten Radarbildern auszugeben, wobei für ein gekennzeichnetes Radarbild verknüpfte Diagramm-Bereichszellen dieselbe Bezeichnung enthalten.

**23.** System nach einem der Ansprüche 1 bis 22, wobei der Erfassungsabdeckungsraum ein vollständiger kreisförmiger Erfassungsbereich ist und wobei die Verarbeitungsschaltung dazu konfiguriert ist, die empfangenen Radardaten in eine sequenzielle Anzahl von kreisförmigen Radarbildern zu unterteilen, wobei jedes kreisförmige Radarbild einer vollständigen kreisförmigen Radarabtastung entspricht.

**Revendications**

**1.** Système de traitement de données radar représentant des valeurs d'intensité de puissance reçue de signaux d'ondes radar réfléchis pour un nombre séquentiel de balayages radar d'un espace de couverture de détection, ledit système comprenant :

une circuiterie de réception configurée pour recevoir des données radar représentant ledit nombre séquentiel de balayages radar ;
une circuiterie de traitement configurée pour diviser les données radar reçues en un nombre séquentiel d'images radar correspondant au nombre séquentiel de balayages radar, et configurée pour subdiviser une image radar en une pluralité de cellules de portée, moyennant quoi chaque cellule de portée a un emplacement dans l'image radar, et dans lequel chaque cellule de portée a des données radar représentant une valeur d'intensité de puissance reçue de signaux d'onde radar réfléchis correspondant à l'emplacement de la cellule de portée dans l'image radar ; et
une circuiterie de prétraitement (302) configurée pour prétraiter les valeurs d'intensité obtenues pour des cellules de portée du nombre séquentiel des images radar, ledit prétraitement des données de valeur d'intensité comprenant :

un premier processus de déviation (402) pour la première image radar, et un nombre suivant de processus de déviation (403) pour chacune des prochaines images radar suivantes dans le nombre séquentiel obtenu d'images radar ;
dans lequel le premier processus de déviation (402) pour chaque cellule de portée ayant un emplacement dans la première image radar comprend :

la détermination (502) d'une valeur initiale pour une moyenne mobile de la valeur d'intensité pour chaque cellule de portée dans la première image radar ;

la détermination (601) d'une première valeur d'intensité sur la base, au moins en partie, de la valeur d'intensité de la cellule de portée ;

la détermination (602) d'une première valeur de déviation par rapport à la moyenne mobile de la valeur d'intensité de la cellule de portée sur la base, au moins en partie, de la première valeur d'intensité obtenue et de la valeur initiale obtenue pour la moyenne mobile de la valeur d'intensité de la cellule de portée ; et

la détermination (603) d'une première valeur pour la moyenne mobile de la valeur d'intensité de la cellule de portée sur la base, au moins en partie, de la valeur initiale obtenue pour la moyenne mobile et de la première valeur d'intensité obtenue ;

dans lequel le nombre suivant de processus de déviation (403) pour chacune des prochaines images radar obtenues suivantes comprend :

pour chaque cellule de portée ayant un emplacement dans une prochaine image radar obtenue suivante, alors :

la détermination (701) d'une prochaine valeur d'intensité sur la base, au moins en partie, de la valeur d'intensité de la cellule de portée ayant ledit emplacement dans ladite prochaine image radar ;

la détermination (702) d'une prochaine valeur de déviation à partir de la moyenne mobile de la valeur d'intensité de la cellule de portée sur la base, au moins en partie, de la prochaine valeur d'intensité obtenue pour la cellule de portée ayant ledit emplacement dans ladite prochaine image radar et d'une valeur obtenue précédemment pour la moyenne mobile de la valeur d'intensité de la cellule de portée ayant le même emplacement dans l'image radar obtenue précédemment ; et

la détermination (703) d'une prochaine valeur pour la moyenne mobile de la valeur d'intensité de la cellule de portée sur la base, au moins en partie, de la prochaine valeur d'intensité obtenue pour la cellule de portée ayant ledit emplacement dans ladite image suivante et la valeur obtenue précédemment pour la moyenne mobile de la valeur d'intensité de la cellule de portée ayant le même emplacement dans l'image radar obtenue précédemment.

2. Système selon la revendication 1, dans lequel la détermination (702) de la prochaine valeur de déviation pour une cellule de portée à un emplacement dans une prochaine image radar comprend une soustraction de ladite valeur obtenue précédemment pour la moyenne mobile de la valeur d'intensité de la prochaine valeur d'intensité obtenue pour la cellule de portée ayant ledit emplacement dans ladite prochaine image radar.

3. Système selon la revendication 1 ou 2, dans lequel la prochaine valeur pour la moyenne mobile de la valeur d'intensité pour une cellule de portée est déterminée (703) en tant que valeur de moyenne mobile exponentielle.

4. Système selon l'une quelconque des revendications 1 à 3, dans lequel la première valeur d'intensité pour chacune des cellules de portée dans la première image radar est déterminée (601) en tant que première valeur d'intensité normalisée sur la base, au moins en partie, de la valeur d'intensité de ladite cellule de portée et des valeurs d'intensité maximale et minimale déterminées pour toutes les cellules de portée de la première image radar.

5. Système selon l'une quelconque des revendications 1 à 4, dans lequel la prochaine valeur d'intensité pour chacune des cellules de portée ayant un emplacement dans une prochaine image radar obtenue suivante est déterminée (701) en tant que prochaine valeur d'intensité normalisée sur la base, au moins en partie, de la valeur d'intensité de la cellule de portée ayant ledit emplacement dans ladite prochaine image radar et des valeurs d'intensité maximale et minimale déterminées pour toutes les cellules de portée de ladite prochaine image radar.

6. Système selon l'une quelconque des revendications 1 à 5, dans lequel la première valeur de déviation pour chacune des cellules de portée dans la première image radar est déterminée (602) en tant que première valeur de déviation mise à l'échelle.

7. Système selon l'une quelconque des revendications 1 à 6, dans lequel la prochaine valeur de déviation pour chacune des cellules de portée ayant un emplacement dans une prochaine image radar obtenue suivante est déterminée (702) en tant que prochaine valeur de déviation mise à l'échelle.

8. Système selon l'une quelconque des revendications 1 à 7, dans lequel la première valeur pour la moyenne mobile de la valeur d'intensité pour chaque cellule de portée dans la première image radar est égale à la première valeur d'intensité obtenue de la cellule de portée.

9. Système selon l'une quelconque des revendications 1 à 8, dans lequel la première valeur d'intensité pour une cellule de portée est déterminée (601) en tant que première valeur d'intensité normalisée, Xnorm-first, étant déterminée en utilisant l'équation

$$Xnorm\text{-}first = (X\text{-}Xmin)/(Xmax\text{-}Xmin),$$

où X représente la valeur d'intensité pour la cellule de portée, et Xmin et Xmax représentent les valeurs d'intensité minimale et maximale, respectivement, pour toutes les cellules de portée de la première image radar.

10. Système selon la revendication 9, dans lequel, pour toute cellule de portée sélectionnée dans la première image radar obtenue, la première valeur pour la moyenne mobile de la valeur d'intensité, Xavg-first, est déterminée (603) en utilisant l'équation

$$Xavg\text{-}first = Xnorm\text{-}first,$$

où Xnorm-first représente la valeur d'intensité normalisée pour la cellule de portée sélectionnée dans la première image radar obtenue.

11. Système selon l'une quelconque des revendications 1 à 10, dans lequel la prochaine valeur d'intensité pour une cellule de portée est déterminée (701) en tant que prochaine valeur d'intensité normalisée, Xnorm-next, en utilisant l'équation

$$Xnorm\text{-}next = (X\text{-}Xmin)/(Xmax\text{-}Xmin),$$

où X représente la valeur d'intensité pour la cellule de portée, et Xmin et Xmax représentent les valeurs d'intensité minimale et maximale, respectivement, pour toutes les cellules de portée de l'image radar contenant la cellule de portée.

12. Système selon la revendication 11, dans lequel, pour toute cellule de portée sélectionnée dans une prochaine image radar obtenue, la prochaine valeur pour la moyenne mobile de la valeur d'intensité, Xavg-new est déterminée (703) en utilisant l'équation

$$Xavg\text{-}new = (1\text{-}f)\ Xavg\text{-}pre + f\ Xnorm\text{-}next,$$

où Xnorm-next représente la valeur d'intensité normalisée pour la cellule de portée sélectionnée dans ladite prochaine image radar obtenue, et Xavg-pre représente la moyenne mobile de la valeur d'intensité pour la même cellule de portée sélectionnée dans l'image radar précédente, et f est un facteur d'échelle, qui se situe dans la plage de 1/300 à 1/50.

13. Système selon la revendication 12, dans lequel le facteur d'échelle f se situe dans la plage de 1/250 à 1/100, comme environ 1/200.

14. Système selon l'une quelconque des revendications 1 à 13, dans lequel, pour toute cellule de portée sélectionnée dans la première image radar obtenue, la première valeur de déviation, Xdev-first, est déterminée (602) en utilisant l'équation Xdev-first = 0,5.

15. Système selon l'une quelconque des revendications 1 à 14, dans lequel, pour toute cellule de portée sélectionnée dans une prochaine image radar obtenue, la valeur de la prochaine valeur de déviation est déterminée (702) en tant que prochaine valeur de déviation mise à l'échelle, Xdev-next, déterminée en utilisant l'équation

$$Xdev\text{-}next = min(max[(Xnorm\text{-}next - Xavg\text{-}pre + 0,5),\ 0],\ 1)$$

où Xnorm-next représente la valeur d'intensité normalisée pour la cellule de portée sélectionnée dans ladite prochaine image radar obtenue, et Xavg-pre représente la moyenne mobile de la valeur d'intensité pour la même cellule de portée sélectionnée dans l'image radar précédente.

**16.** Système selon l'une quelconque des revendications 1 à 15, dans lequel le système comprend en outre une circuiterie d'étiquetage d'image (303) pour un traitement supplémentaire des valeurs d'intensité de déviation obtenues à partir du premier processus de déviation (402) et du nombre suivant de processus de déviation (403).

**17.** Système selon la revendication 16, dans lequel la circuiterie d'étiquetage d'image (303) est configurée pour lier ou étiqueter des cellules de portée voisines d'une image radar dans des tracés radar sur la base des valeurs d'intensité de déviation obtenues des cellules de portée situées dans ladite image radar.

**18.** Système selon la revendication 16 ou 17, dans lequel la circuiterie d'étiquetage d'image (303) est configurée pour : lier chaque cellule de portée dans une image radar à une étiquette de classe sur la base des valeurs d'intensité de déviation obtenues pour les cellules de portée de ladite image radar.

**19.** Système selon l'une quelconque des revendications 16 à 18, dans lequel la circuiterie d'étiquetage d'image (303) est configurée pour contenir un réseau neuronal convolutif entraîné, tel qu'un réseau dit U-net, qui est configuré pour effectuer une analyse spatiale des valeurs d'intensité de déviation obtenues pour les cellules de portée dans une image radar, ladite analyse spatiale comprenant une fonction d'activation finale produisant des valeurs d'intensité de sortie dans la plage de 0 à 1 pour chaque cellule de portée dans l'image radar.

**20.** Système selon la revendication 19, dans lequel la circuiterie d'étiquetage d'image (303) est configurée pour effectuer, pour chaque cellule de portée dans une image radar, un seuillage des valeurs en sortie du réseau neuronal pour les cellules de portée, lequel seuillage classe une cellule de portée en tant que cellule de portée de tracé ou en tant que cellule de portée de non tracé.

**21.** Système selon la revendication 20, dans lequel la circuiterie d'étiquetage d'image (303) est configurée pour lier des cellules de portée de tracé voisines dans une image radar à la même étiquette de classe, moyennant quoi les cellules de portée ayant la même étiquette forment un tracé radar.

**22.** Système selon la revendication 20, dans lequel la circuiterie d'étiquetage d'image (303) est configurée pour délivrer en sortie un nombre séquentiel d'images radar étiquetées, dans lequel pour une image radar étiquetée, des cellules de portée de tracé liées contiennent la même étiquette.

**23.** Système selon l'une quelconque des revendications 1 à 22, dans lequel l'espace de couverture de détection est une portée de détection circulaire complète, et dans lequel la circuiterie de traitement est configurée pour diviser les données radar reçues en un nombre séquentiel d'images radar circulaires, chaque image radar circulaire correspondant à un balayage radar circulaire complet.

Radar image

# Fig. 1

Radar image for pulsed radar system:
A radar image has 1024 image lines to cover a full 360 degree image. Each image line covers 360/1024 degrees in Azimuth.
Each image lines has 2000 range cells, each range cells covers 5 m.
Radar rotates with 47 rpm, one full radar image for each rotation.

```
┌─────────────────────────────┐
│  Raw digital radar image scan │ ⟋ 201
│            data              │
└─────────────────────────────┘
                │
                ▼
┌─────────────────────────────┐
│       Clutter filtering      │ ⟋ 202
└─────────────────────────────┘
                │
                ▼
┌─────────────────────────────┐
│  Group neighboring range cells │ ⟋ 203
│  having matching data into plots │
└─────────────────────────────┘
                │
                ▼
┌─────────────────────────────┐
│   Update and initiate new tracks │ ⟋ 204
└─────────────────────────────┘
                │
                ▼
┌─────────────────────────────┐
│        Classify tracks       │ ⟋ 205
└─────────────────────────────┘
```

200

Fig. 2

```
┌─────────────────────────────────┐
│   Raw digital radar image scan  │── 301
│            data                 │
└─────────────────────────────────┘
                │
                ▼
┌─────────────────────────────────┐
│    Pre-processing circuitry.    │── 302
│   Pre-processing image range    │
│           cell data             │
└─────────────────────────────────┘
                │
                ▼
┌─────────────────────────────────┐
│    Image labeling circuitry.    │── 303
│  Labeling image range cells and │
│   group matching neighboring    │
│      range cells into plots     │
└─────────────────────────────────┘
                │
                ▼
┌─────────────────────────────────┐
│       Tracking circuitry.       │── 304
│     Match plots into tracks     │
└─────────────────────────────────┘
                │
                ▼
┌─────────────────────────────────┐
│         Update tracks           │── 305
└─────────────────────────────────┘
                │
                ▼
┌─────────────────────────────────┐
│         Classify tracks         │── 306
└─────────────────────────────────┘
```

300

# Fig. 3

Pre-processing image data — 302

Raw digital radar image scan data — 301

401 — Initialization process. Determine an initial value for a moving average of the intensity value for each range cell of a first radar image

402 — First deviation process. Determine a deviation in intensity data of range cells of the first radar image | Image labeling →

403 — Following deviation processes. Determine a deviation in intensity data of range cells of following radar images | Image labeling →

Fig. 4

Initialization process   401

Raw digital radar image scan data   301

501    Determine a first normalized intensity value for each range cell of the first radar image

502    Determine an initial value for a moving average for each range cells of the first radar image by setting the initial value equal to the determined first normalized intensity value

First deviation process

Fig. 5

First deviation process ⌐ 402

Raw digital radar image scan data ⌐ 301

601 ⌐ Determine a first normalized intensity value for each range cell of the first radar image

Initial value of moving average

Determine a first deviation in intensity value for each range cell of the first radar image based on the first normalized intensity value and the initial value of the moving average

602 ⌐

Image labeling

603 ⌐ Determine a first value for the moving average for each range cells of the first radar image based on the initial value of the moving average and the first normalized intensity value

Following deviation process

Fig. 6

Following deviation processes — 403

Raw digital radar image scan data — 301

701 — Determine a next normalized intensity value for range cells of the next radar image

Previously obtained value of moving average

702 — Determine a next deviation in intensity value of range cells of the next radar image based on the next normalized intensity value and the previously obtained value of the moving average

Image labeling

703 — Determine a new value for the moving average for range cells of the next radar image based on the previously obtained value of the moving average and the next normalized intensity value

Next following deviation process

# Fig. 7

Determine a normalized intensity value
Xnorm for the intensity value X of a range cell
of a radar image using the formula
Xnorm = (X-Xmin)/(Xmax-Xmin)

801

Determine an initial value Xavg-initial for a
moving average for a range cell of the first
radar image by setting the initial value equal
to the determined first normalized intensity
value,
Xavg-initial = Xnorm-first

802

Determine a first value Xavg-first for the
moving average for each range cells of the
first radar image by setting the initial value
equal to the determined initial value
Xavg-initial,
Xavg-first = Xavg-initial = Xnorm-first

803

Determine a new value Xavg-new for the
moving average for a range cell of a next
radar image based on the previously obtained
value of the moving average Xavg-pre and
the next normalized intensity value
Xnorm-next using the formula
Xavg-new = (1-f)Xavg-pre + f Xnorm-next.
f is a scaling factor, which may be set to
1/200

804

Fig. 8

Determine a first deviation in intensity value Xdev-first for a range cell of the first radar image by use of the formula Xdev-first = min(max[(Xnorm-first - Xavg-initial +0.5), 0], 1). For Xavg-initial = Xnorm-first, the value of Xdev-first is 0.5.

— 901

Determine a next deviation in intensity value Xdev-next for a range cell of a next radar image by use of the formula Xdev-next = min(max[(Xnorm-next - Xavg-pre +0,5), 0], 1)

— 902

Fig. 9

Image labeling circuitry. ⌐ 303

Trained convolutional neural network, U-Net. Performs spatial analysis of received deviation intensity values for range cells within a radar image. Use a final activation function for yelding output intensity values in the range of 0 to 1 for each range cell of a radar image ⌐ 1001

deviation intensity values →

Thresholding circuitry.
Performs a thresholding classification of the intensity values being received from the neural network. Classifies a range cell as a potential plot range cell when the intensity value is larger than a given threshold value. The threshold value may be set to 0.5 ⌐ 1002

Class labeling circuitry.
Links neigboring range cells to the same class label by use of connected component labeling. Range cells having the same labels form a plot. ⌐ 1003

To tracking circuitry, 304

# Fig. 10

Raw digital radar image scan data — 301

302

1101 — Determine a normalized intensity value for the intensity value of each range cell of a radar image

1103 — Store previously obtained value of the moving average for each range cell of the previous radar image

1104 — Determine a deviation in intensity value of each range cells of a radar image

1102 — Determine a new value for the moving average for each range cells of a radar image

Trained neural network, U-Net

1001

Thresholding circuitry

1002

Class labeling circuitry

1003

303

Tracking circuitry. Match plots into tracks

304

# Fig. 11

1208

1207

1204

1205

1209

1206

1210

1201

Computer — 1202

1203

Command + control

Fig. 12

**EP 3 893 020 B1**

**Patent documents cited in the description**

- US 2010073218 A1